# FASCICULE DE BREVET EUROPEEN

(11) **EP 4 698 438 B1**
(45) Date de publication et mention de la délivrance du brevet: **08.07.2026**
(21) Numéro de dépôt: 24840850.2
(22) Date de dépôt: 18.12.2024
(51) Int. Cl.: B64G 1/64

(54) **PROCÉDÉ ET SYSTÈME SPATIAL POUR L'ÉJECTION D'AU MOINS DEUX SATELLITES DEPUIS UN LANCEUR**
VERFAHREN UND RAUMFAHRTSYSTEM ZUM AUSWERFEN VON MINDESTENS ZWEI SATELLITEN AUS EINER ABSCHUSSVORRICHTUNG
METHOD AND SPACE SYSTEM FOR EJECTING AT LEAST TWO SATELLITES FROM A LAUNCHER

(30) Priorité: 24.01.2024 FR 2400612
(43) Date de publication de la demande: 25.02.2026
(73) Titulaire: Airbus Defence and Space SAS, 31402 Toulouse Cedex 4 (FR)
(72) Inventeur: MONGE-CADET, Mathieu, 31402 TOULOUSE CEDEX 4 (FR); TAJAN, Florent, 31402 TOULOUSE CEDEX 4 (FR)
(74) Mandataire: Plasseraud IP
(86) Numéro de dépôt international: PCT/FR2024/051708
(87) Numéro de publication internationale: WO 2025/158115

(56) Documents cités:
- US-A- 5 199 672
- US-A1- 2015 102 174
- US-A1- 2020 270 001
- US-A1- 2021 229 839
- US-B1- 11 878 820

## Description

### Domaine technique

La présente divulgation concerne un procédé d'éjection d'au moins deux satellites depuis un lanceur. Les satellites sont initialement disposés côte-à-côte et retenus sur le lanceur. La présente divulgation concerne également un système spatial comprenant un lanceur et au moins deux satellites, adapté pour la mise en œuvre du procédé.

### Technique antérieure

Il existe un besoin pour éjecter, depuis un lanceur, au moins deux satellites allongés, initialement disposés côte-à-côte et retenus sur le lanceur, en minimisant les risques de collision entre les satellites lors de l'éjection puis en orbite. US 2021/229839 A1 divulgue un procédé d'agencement d'une pluralité d'engins spatiaux sous la coiffe d'un lanceur sans distributeur structurel et un ensemble résultant d'un tel procédé.

### Résumé

La présente divulgation vient proposer une solution à ce problème.

Il est proposé un procédé d'éjection d'au moins deux satellites depuis un lanceur, lesdits au moins deux satellites étant orientés selon un axe central confondu avec un axe longitudinal du lanceur et solidarisés entre eux côte-à-côte. Le procédé comprend une orientation initiale de la direction de l'axe longitudinal du lanceur, de manière à former un angle prédéterminé avec un axe de vitesse orbitale, l'angle prédéterminé étant compris entre 20° et 60°, notamment entre 25° et 50°, étant de préférence compris entre 30° et 40°. Le procédé comprend une première séparation comprenant la séparation simultanée hors du lanceur desdits satellites selon l'axe longitudinal avec une première vitesse différentielle prédéterminée relativement au lanceur, lesdits au moins deux satellites restant solidaires entre eux, puis une deuxième séparation comprenant la séparation desdits satellites l'un par rapport à l'autre selon un axe perpendiculaire à l'axe central et compris dans le plan orbital, avec une deuxième vitesse différentielle prédéterminée.

Lesdits au moins deux satellites sont initialement retenus par le lanceur, notamment au dernier étage du lanceur.

Les deux séparations sont séquencées, la deuxième séparation intervenant après la première séparation, même si le délai entre les deux séparations peut être très réduit.

La première séparation a lieu selon un premier axe d'éjection parallèle à l'axe longitudinal du lanceur. La deuxième séparation a lieu selon un deuxième axe d'éjection. Le deuxième axe d'éjection est perpendiculaire à l'axe central et dans le plan de l'orbite.

Le procédé d'éjection présente les avantages d'être simple et de minimiser les risques de collision.

En effet, grâce à ce procédé, on peut éviter une collision à court et long terme entre les satellites et avec le lanceur. En particulier, le principe de la première séparation suivie de la deuxième séparation permet d'éviter l'éjection des satellites l'un après l'autre depuis le lanceur. Dans une telle solution d'éjection des satellites l'un après l'autre depuis le lanceur, les forces d'éjection agiraient avec un bras de levier sur le dernier étage du lanceur, générant une très forte vitesse de rotation sur celui-ci, ce qui rend la solution impossible.

Les caractéristiques exposées dans les paragraphes suivants peuvent, optionnellement, être mises en œuvre, indépendamment les unes des autres ou en combinaison les unes avec les autres :

La projection de la première vitesse différentielle entre le lanceur et lesdits satellites sur l'axe de vitesse orbitale est de préférence comprise entre 0,02 m.s⁻¹ et 0,6 m.s⁻¹. La projection de la deuxième vitesse différentielle entre lesdits satellites sur l'axe de vitesse orbitale est de préférence comprise entre 0,02 m.s⁻¹ et 0,6 m.s⁻¹.

La première ou la deuxième vitesse différentielle est un vecteur défini par un angle et une norme. Dans la présente divulgation, on caractérise la première ou la deuxième vitesse différentielle par sa projection sur l'axe de vitesse orbitale, valeur qui compte pour permettre d'éviter les collisions, l'angle pouvant être adapté en fonction du cas d'espèce.

Chaque satellite a de préférence une longueur supérieure à sa largeur. Dans ce cas, les satellites sont initialement allongés selon l'axe longitudinal du lanceur. En particulier, chaque satellite peut avoir un rapport de sa longueur sur sa largeur au moins égal à deux. Chaque satellite est de préférence retenu initialement à une extrémité longitudinale sur le lanceur. Les satellites sont de préférence identiques, au moins pour la forme extérieure.

Il est à noter que, à cause d'une telle longueur de chaque satellite, le cône d'éjection, c'est-à-dire le cône dans lequel le satellite peut être éjecté sans problème de collision, est très faible.

Le nombre de satellites peut être égal à deux. En variante, le nombre de satellites peut être égal à trois, voire à quatre. Le nombre de satellites est de préférence inférieur ou égal à quatre.

Les satellites peuvent être initialement reliés au lanceur à l'aide d'au moins un premier dispositif de maintien et libération, encore appelé HDRM pour « hold down and release mechanism » en anglais. Le premier dispositif de maintien et libération peut être configuré pour libérer les satellites pour la mise en œuvre de la première séparation. La mise en œuvre est enclenchée notamment par le lanceur. Au moins un premier éjecteur, notamment quatre premiers éjecteurs, peut être disposé entre le lanceur et chacun des satellites. Ledit au moins un premier éjecteur s'étend de préférence sensiblement selon l'axe longitudinal. Ledit au moins un premier éjecteur est avantageusement initialement préchargé de manière à stocker une première quantité d'énergie adaptée pour conférer la première vitesse différentielle lors de la première séparation.

Ainsi, le ou chaque premier dispositif de maintien et libération permet de séparer, lors de la première séparation, les satellites et le lanceur, tandis que le ou les premiers éjecteurs permettent de conférer la vitesse différentielle lors de la première séparation.

Les satellites peuvent être reliés initialement entre eux à l'aide d'au moins un deuxième dispositif de maintien et libération (HDRM), notamment au moins deux tels dispositifs HDRM. Le deuxième dispositif de maintien et libération peut être configuré pour libérer les satellites pour la mise en œuvre de la deuxième séparation. Au moins un deuxième éjecteur, notamment quatre deuxièmes éjecteurs, peut être initialement disposé entre les satellites. Ledit au moins un deuxième éjecteur s'étend de préférence sensiblement perpendiculairement par rapport à l'axe central, qui était initialement confondu avec l'axe longitudinal, et dans le plan de l'orbite. Ledit au moins un deuxième éjecteur est avantageusement initialement préchargé de manière à stocker une deuxième quantité d'énergie adaptée pour conférer ladite deuxième vitesse différentielle lors de ladite deuxième séparation.

Ainsi, le ou chaque deuxième dispositif de maintien et libération permet de séparer, lors de la deuxième séparation, les satellites entre eux, tandis que le ou les deuxièmes éjecteurs permettent de conférer la vitesse différentielle lors de la deuxième séparation.

La deuxième quantité d'énergie est avantageusement inférieure à la première quantité d'énergie, afin que la masse des éjecteurs soit plus faible sur les satellites que sur le lanceur. L'objectif de l'éjection est de fournir une vitesse différentielle donnée et l'énergie pour y parvenir dépend notamment de la masse des corps, en l'espèce des satellites, à éjecter. Dans un exemple particulier, correspondant à une masse de satellite donnée, la première quantité d'énergie peut être comprise entre 20J et 30J tandis que la deuxième quantité d'énergie peut être comprise entre 5J et 10J. Les valeurs de première et deuxième quantités d'énergie seront bien entendu à adapter en fonction de la masse des satellites et pourront alors ne pas être comprises dans ces plages de valeurs.

Les premiers éjecteurs et/ou les deuxièmes éjecteurs sont de préférence constitués par des ressorts qui, lorsque libérés de leur contrainte, repoussent selon leur axe. En particulier, les premiers éjecteurs et/ou les deuxièmes éjecteurs sont de préférence distincts des ressorts dits ressorts tiltés, aptes à faire tourner les satellites. En effet, ces derniers, bien qu'envisageables, sont complexes et risqués à cause de la longueur de chaque satellite, la moindre rotation générée lors de l'éjection risquant de générer une collision entre les satellites.

Les premier et/ou deuxième dispositifs de maintien et libération sont de préférence constitués par des systèmes générant peu de chocs. De plus, dans le cas où il y aurait plusieurs dispositifs de maintien et libération par interface il faudrait de préférence que les dispositifs de maintien et libération puissent se libérer avec une bonne simultanéité. Le laps de temps entre la mise en œuvre de la première séparation et la mise en œuvre de la deuxième séparation est de préférence inférieur à 10s, de préférence encore inférieur à 5s. Ce laps de temps est celui qui est nécessaire pour détecter la première séparation et déclencher la deuxième séparation. Pendant ce laps de temps, les satellites encore solidaires entre eux peuvent éventuellement tourner sur eux-mêmes à cause de la première éjection. On cherche à éviter au maximum cette rotation donc on cherche à conserver un laps de temps réduit entre première et deuxième séparations. L'angle de rotation des satellites pendant ce laps de temps est de préférence inférieur ou égal à 10°.

Selon un autre aspect, en combinaison avec ce qui précède, il est proposé un système spatial d'éjection d'au moins deux satellites, comportant un lanceur recevant les satellites reliés initialement au lanceur, lesdits satellites étant orientés selon un axe central confondu avec l'axe longitudinal du lanceur et solidarisés entre eux côte-à-côte. Le système spatial comprend un module de pilotage d'une orientation initiale de la direction de l'axe longitudinal du lanceur, de manière à former un angle prédéterminé avec un axe de vitesse orbitale, l'angle prédéterminé étant compris entre 20° et 60°, notamment entre 25° et 50°, étant de préférence compris entre 30° et 40°. Le système spatial comprend encore un premier module de commande d'une première séparation comprenant la séparation simultanée hors du lanceur des satellites selon l'axe longitudinal avec une première vitesse différentielle prédéterminée relativement au lanceur, les satellites restant solidaires entre eux, puis un deuxième module de commande d'une deuxième séparation comprenant la séparation des satellites l'un par rapport à l'autre selon un axe transversal à l'axe central avec une deuxième vitesse différentielle prédéterminée.

Le premier module de commande peut être configuré pour commander la première séparation sur ordre distant provenant d'une station au sol. Un des satellites peut être configuré pour détecter la mise en œuvre de la première séparation et pour déclencher, suite à cette détection, la deuxième séparation commandée par le deuxième module de commande.

Chaque satellite peut avoir un rapport de sa longueur sur sa largeur au moins égal à deux. Chaque satellite est de préférence retenu initialement à une extrémité longitudinale sur le lanceur, notamment au dernier étage du lanceur.

Le lanceur peut comporter au moins un premier dispositif de maintien et libération (HDRM) pour maintenir initialement les satellites reliés au lanceur. Le premier module de commande peut être configuré pour actionner le premier dispositif de maintien et libération de manière à séparer les satellites hors du lanceur. Le lanceur peut comporter au moins un premier éjecteur, notamment quatre premiers éjecteurs, disposé entre le lanceur et chacun des satellites et s'étendant sensiblement selon l'axe longitudinal. Ledit au moins un premier éjecteur est de préférence initialement préchargé de manière à stocker une première quantité d'énergie adaptée pour conférer la première vitesse différentielle lors de la première séparation.

Les satellites peuvent comporter au moins un deuxième dispositif de maintien et libération (HDRM) pour les relier initialement entre eux. Le deuxième module de commande peut être configuré pour actionner le deuxième dispositif de maintien et libération de manière à séparer les satellites entre eux. Les satellites peuvent comporter au moins un deuxième éjecteur, notamment quatre deuxièmes éjecteurs, initialement disposé entre les satellites et s'étendant sensiblement transversalement, notamment perpendiculairement, par rapport à l'axe central. Ledit au moins un deuxième éjecteur est de préférence initialement préchargé de manière à stocker une deuxième quantité d'énergie adaptée pour conférer ladite deuxième vitesse différentielle lors de la deuxième séparation.

### Brève description des dessins

D'autres caractéristiques, détails et avantages apparaîtront à la lecture de la description détaillée ci-après, et à l'analyse des dessins annexés, sur lesquels :
[Fig. 1] montre schématiquement en vue de côté un exemple de système spatial.
[Fig. 2] montre schématiquement, dans l'espace, une orientation initiale de la direction de l'axe longitudinal du lanceur dans la mise en œuvre d'un procédé d'éjection de deux satellites depuis un lanceur selon un exemple.
[Fig. 3] montre schématiquement une première séparation dans la mise en œuvre du procédé selon un exemple.
[Fig. 4] montre schématiquement le comportement des satellites après la première séparation illustrée sur la figure 3.
[Fig. 5] montre schématiquement une deuxième séparation dans la mise en œuvre du procédé selon un exemple.
[Fig. 6] montre schématiquement, partiellement et en perspective, un exemple de système spatial.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures.

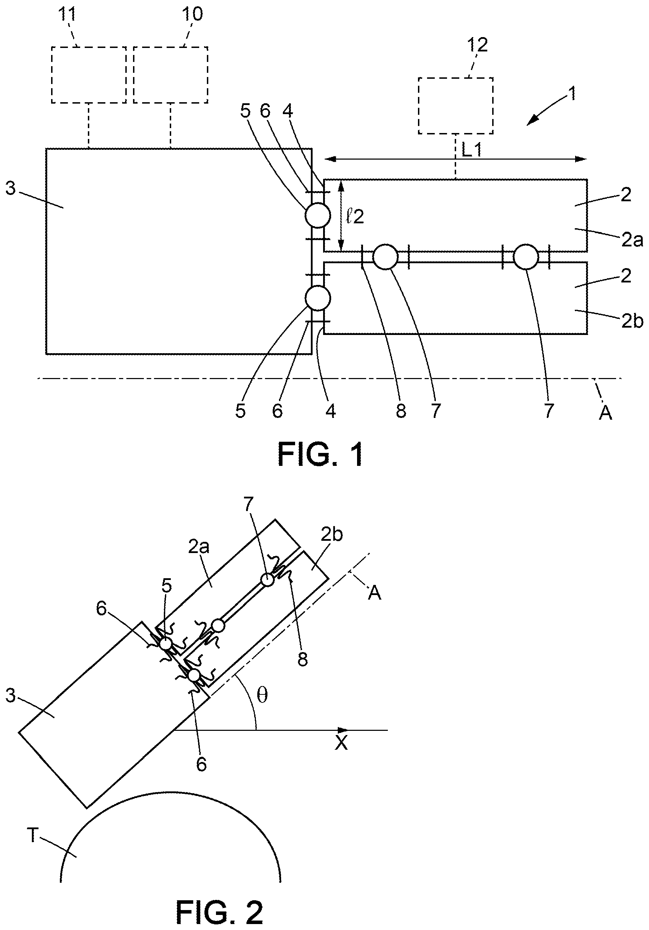

Il est maintenant fait référence à la figure 1. On y voit un système spatial 1 d'éjection d'au moins deux satellites 2, dans cet exemple exactement deux satellites référencés respectivement 2a et 2b. Le système spatial 1 comporte un lanceur 3 recevant, à son dernier étage, les satellites 2 reliés initialement au lanceur 3. Comme visible sur la figure 1, le lanceur 3 s'étend selon un axe longitudinal A. Initialement, les satellites 2 sont orientés, autour d'un axe central, selon l'axe longitudinal A et sont solidarisés entre eux côte-à-côte.

Les satellites 2 sont dans cet exemple identiques, au moins pour la forme extérieure. Chaque satellite 2 a une longueur supérieure à sa largeur. Dans l'exemple illustré, les satellites 2 ont chacun un rapport de sa longueur L1 sur sa largeur *l2* au moins égal à deux. Par exemple, la longueur L1 est égale à 4 m et la largeur *l2* est égale à 1 m. L'épaisseur de chaque satellite 2, non visible sur cet exemple, peut être égale à la largeur, soit 1 m dans cet exemple. Chaque satellite 2 est retenu initialement à une extrémité longitudinale 4 sur le lanceur 3, au niveau du dernier étage du lanceur 3.

Dans l'exemple illustré, le lanceur 3 comporte au moins un premier dispositif de maintien et libération (HDRM) 5 pour maintenir initialement les satellites 2 reliés au lanceur 3. Dans cet exemple, chaque satellite 2 est initialement relié au lanceur 3 à l'aide d'un premier dispositif de maintien et libération (HDRM) 5 disposé à l'interface avec le lanceur. Le lanceur 3 comporte également au moins un premier éjecteur 6, dans cet exemple quatre premiers éjecteurs 6, disposé entre le lanceur 3 et chacun des satellites 2 et s'étendant selon l'axe longitudinal A.

Par ailleurs, toujours dans cet exemple, les satellites 2 comportent au moins un deuxième dispositif de maintien et libération (HDRM) 7 pour les relier initialement entre eux, de part et d'autre de l'axe central. Dans cet exemple, les satellites 2 sont reliés initialement entre eux à l'aide de deux deuxièmes dispositifs de maintien et libération 7 disposés entre les satellites. Les satellites 2 comportent au moins un deuxième éjecteur 8, dans cet exemple quatre deuxièmes éjecteurs 8 initialement disposés entre les satellites 2 et s'étendant transversalement, dans cet exemple perpendiculairement par rapport à l'axe central qui est confondu avec l'axe longitudinal A lorsque les satellites sont fixés au lanceur.

On va décrire maintenant le procédé d'éjection desdits au moins deux satellites 2 depuis le lanceur 3, dans l'espace au-dessus de la terre T, en faisant référence aux figures 2 à 5.

Le procédé comprend tout d'abord, comme illustré sur la figure 2, le pilotage d'une orientation initiale de la direction de l'axe longitudinal A du lanceur 3, de manière à former un angle prédéterminé θ avec un axe de vitesse orbitale X, l'angle prédéterminé θ étant compris entre 20° et 60°, dans cet exemple égal à 40° à + ou - 5°.

Pour ce faire, comme illustré sur la figure 1, le système spatial 1 comprend un module de pilotage 10 de l'orientation initiale de la direction de l'axe longitudinal A du lanceur 3, de manière à former l'angle θ prédéterminé avec l'axe de vitesse orbitale X.

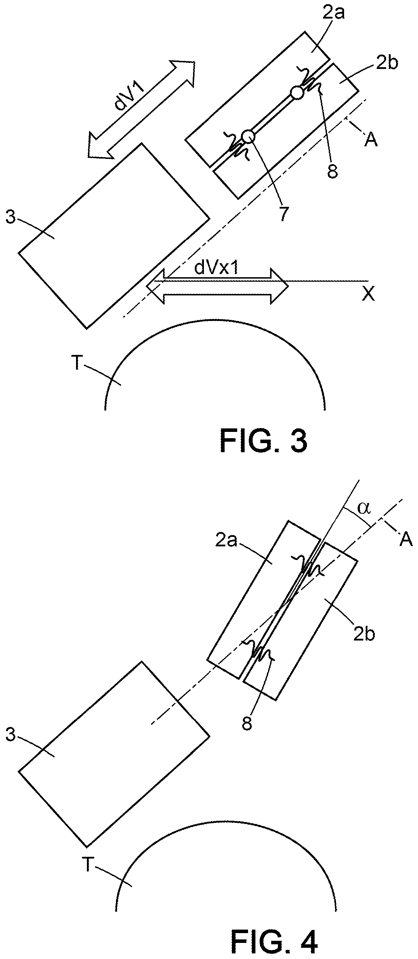

Le procédé comprend ensuite, comme illustré sur la figure 3, le déclenchement d'une première séparation comprenant la séparation simultanée hors du lanceur 3 des satellites 2 selon l'axe longitudinal A du lanceur 3, avec une première vitesse différentielle prédéterminée relativement au lanceur 3, les satellites 2 restant solidaires entre eux comme illustré.

Le système spatial 1 comprend, dans l'exemple illustré sur la figure 1, un premier module de commande 11 configuré pour commander cette première séparation. Le premier module de commande 11 peut être configuré pour commander la première séparation sur ordre distant provenant d'une station au sol. Le satellite comprend notamment un module de télécommunication avec la station au sol. Le premier module de commande 11 est notamment configuré pour actionner le premier dispositif de maintien et libération 5 de manière à séparer les satellites 2 hors du lanceur 3. Le premier dispositif de maintien et libération 5 est configuré pour libérer les satellites pour la mise en œuvre de la première séparation, cette mise en œuvre étant enclenchée notamment par le lanceur 3. Les premiers éjecteurs 6, formés par des ressorts axiaux dans cet exemple, sont initialement préchargés de manière à stocker une première quantité d'énergie adaptée pour conférer la première vitesse différentielle lors de la première séparation.

La projection de la première vitesse différentielle, nommée dVx1, entre le lanceur 3 et les satellites 2 sur l'axe de vitesse orbitale X est de préférence comprise entre 0,02 m.s⁻¹ et 0,6m.s⁻¹, dans cet exemple égale à 0,6 m.s⁻¹, étant représentée par une double flèche. La première vitesse différentielle dV1 se projette en effet sur l'axe de vitesse orbitale X selon la formule : dV1x = dV1*cosθ.

Ainsi, lors de l'enclenchement de la première séparation, le premier module de commande 11 provoque le passage de chaque dispositif de maintien et libération 5 d'un état initial de maintien à un état de libération des satellites 2 depuis le lanceur 3. Lors de cette libération, la présence des premiers éjecteurs 6 confère une première vitesse différentielle entre le lanceur 3 et les satellites 2. Cela permet d'éviter la collision entre lanceur 3 et groupe de satellites 2.

Le procédé comprend, après la première séparation, un laps de temps, illustré sur la figure 4, pendant lequel les satellites 2, toujours solidaires entre eux, tournent éventuellement sur eux-mêmes en s'écartant de l'axe longitudinal A. Le laps de temps est de préférence inférieur à 10s, notamment à 5s. A la fin du laps de temps, les satellites 2 ont par exemple tourné d'un angle α qui, dans l'exemple illustré est de 10° au maximum. Ainsi l'axe central de l'ensemble des satellites solidarisés entre eux, peut dévier par rapport à l'axe longitudinal du lanceur. L'axe central de l'ensemble des satellites solidarisés entre eux peut aussi rester aligné avec l'axe longitudinal du lanceur. Les angles et niveaux d'énergie stockés sont choisis pour fonctionner dans une plage d'angles de déviation de l'axe central par rapport à l'axe longitudinal. Dans la suite on se place dans le cas où l'axe central reste aligné avec l'axe longitudinal.

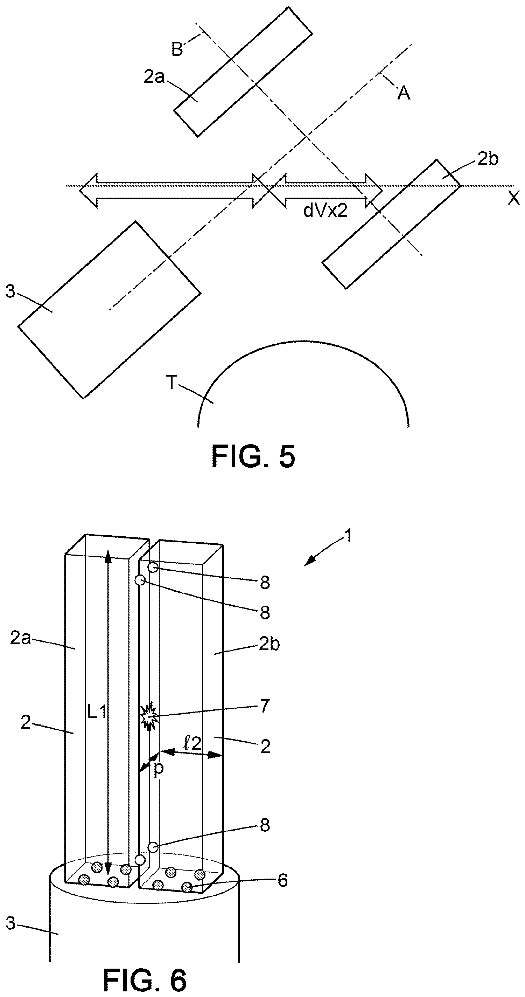

Le procédé comprend alors, après ce laps de temps, le déclenchement d'une deuxième séparation illustrée sur la figure 5, comprenant la séparation des deux satellites 2 l'un par rapport à l'autre selon un axe B perpendiculaire à l'axe central (avant désolidarisation) et compris dans le plan orbital, avec une deuxième vitesse différentielle prédéterminée.

Le système spatial 1 comprend, dans l'exemple illustré sur la figure 1, un deuxième module de commande 12 qui est configuré pour commander la deuxième séparation. Un des satellites 2, en l'occurrence le satellite 2a, est par exemple configuré pour détecter la mise en œuvre de la première séparation et pour déclencher, suite à cette détection, la deuxième séparation commandée par le deuxième module de commande 12. Le deuxième module de commande 12 est configuré pour actionner les deuxièmes dispositifs de maintien et libération 7 de manière à séparer lesdits satellites 2a et 2b entre eux. Les deuxièmes dispositifs de maintien et libération 7 sont configurés pour libérer les satellites 2 pour la mise en œuvre de la deuxième séparation. Les deuxièmes éjecteurs 8, qui sont des ressorts orientés selon un axe B perpendiculaire à l'axe central et appartenant au plan orbital dans cet exemple, sont initialement préchargés de manière à stocker une deuxième quantité d'énergie adaptée pour conférer la deuxième vitesse différentielle lors de la deuxième séparation.

Lors de l'enclenchement de la deuxième séparation, le deuxième module de commande 12 provoque le passage de chaque dispositif de maintien et libération 7 d'un état initial de maintien à un état de libération des satellites 2a et 2b entre eux. Lors de cette libération, la présence des deuxièmes éjecteurs 8 confère la deuxième vitesse différentielle entre les satellites 2. Cela permet d'éviter la collision entre les satellites 2 mais aussi entre le lanceur 3 et chacun des satellites 2.

La projection de la deuxième vitesse différentielle dVx2 entre les satellites 2 sur l'axe de vitesse orbitale X est dans cet exemple comprise entre 0,02 m.s⁻¹ et 0,6 m.s⁻¹. Cette projection dVx2 est illustrée par une double flèche sur la figure 5, étant dans cet exemple supérieure à 0,2 m.s⁻¹. La deuxième vitesse différentielle dV2 se projette en effet sur l'axe de vitesse orbitale X selon l'équation : dVx2 = dV2*sinθ.

Il résulte de la combinaison de la première vitesse différentielle et de la deuxième vitesse différentielle que le lanceur 3 et chacun des satellites 2a et 2b ont chacun une vitesse différente diminuant fortement voire annulant le risque de collision entre eux. Il est à noter que le satellite 2a va en arrière tandis que le satellite 2b va en avant, relativement au lanceur 3.

La combinaison des deux séparations, encore appelées éjections, successives permet de respecter un certain différentiel de vitesse entre chaque objet, c'est-à-dire entre chacun parmi le lanceur et les satellites. Cette vitesse différentielle permet à chaque objet de ne pas se rapprocher au-delà d'un risque de collision acceptable lors des orbites suivantes. On obtient une vitesse différentielle entre le lanceur 3 et le satellite 2a, nommée dV_3/2a, projetée sur l'axe de vitesse orbitale X, qui vérifie l'équation suivante : dV_3/2a=dVx1-dVx2/2. Par ailleurs, on obtient une vitesse différentielle entre le satellite 2a et le satellite 2b, nommée dV_2a/2b qui vérifie l'équation suivante : dV_2a/2b=dVx2.

L'angle initial θ peut être optimisé, sous contrainte d'une différence de vitesse minimum entre chaque objet, pour minimiser l'énergie nécessaire de chaque premier ou deuxième éjecteur et donc minimiser la masse des premiers et deuxièmes éjecteurs, ainsi que les rotations résiduelles générées par les dispersions sur ceux-ci.

Les éjecteurs peuvent être positionnés avec un grand écart entre eux pour chaque éjection, ce qui minimise les rotations résiduelles générées par des dispersions de force/énergie entre chaque éjecteur.

La deuxième quantité d'énergie est avantageusement inférieure à la première quantité d'énergie, afin que la masse des éjecteurs soit plus faible sur les satellites 2 que sur le lanceur 3. L'objectif de l'éjection est de fournir une vitesse différentielle donnée et l'énergie pour y parvenir dépend notamment de la masse des corps, en l'occurrence des satellites, à éjecter. Dans un exemple particulier, correspondant à une masse de satellite donnée, la première quantité d'énergie peut être comprise entre 20J et 30J tandis que la deuxième quantité d'énergie peut être comprise entre 5J et 10J. Les valeurs de première et deuxième quantités d'énergie seront bien entendu à adapter en fonction de la masse des satellites 2 et pourront alors ne pas être comprises dans ces plages de valeurs.

La première séparation a lieu selon un premier axe d'éjection parallèle à l'axe longitudinal A du lanceur 3 confondu avec l'axe central lorsque les satellites sont solidarisés au lanceur. La deuxième séparation a lieu selon un deuxième axe d'éjection qui est l'axe B. Le deuxième axe d'éjection est dans le plan de l'orbite et perpendiculaire à l'axe central défini par rapport à l'ensemble des satellites avant leur désolidarisation.

Le nombre de satellites est, dans cet exemple, égal à deux. Les satellites sont alors disposés en vis-à-vis de part et d'autre de l'axe central. En variante, le nombre de satellites peut être égal à trois, voire à quatre. Les satellites sont alors disposés autour de l'axe central. Le nombre de satellites est de préférence inférieur ou égal à quatre.

On a représenté sur la figure 6 le système spatial 1 avec deux satellites 2, 2a et 2b. On visualise sur la figure 6, outre la longueur L1 et la largeur *l2* de chaque satellite 2, la profondeur *p* de chaque satellite 2, 2a ou 2b, qui, dans cet exemple est de même dimension que la largeur *l2*. La forme de chaque satellite 2 peut varier. En particulier, la section de largeur *l2* et de profondeur *p* peut être différente d'un carré, étant par exemple rectangulaire, trapézoïdale ou toute autre forme. Les satellites sont par exemple représentés de mêmes dimensions selon leur longueur, largeur et profondeur, mais peuvent également par exemple être de dimensions différentes. Les satellites peuvent par exemple avoir des masses identiques, mais peuvent également par exemple être de masses différentes.

Les premiers et deuxièmes éjecteurs 6 et 8 sont des ressorts axiaux, notamment de compression. En particulier, ce ne sont pas, de préférence, des ressorts tiltés. Les premiers éjecteurs 6, au nombre de quatre pour chaque satellite 2, sont répartis à la base de chaque satellite 2, notamment de manière régulière, par exemple en carré, n'étant pas tous alignés, comme illustré par exemple sur la figure 6. Les deuxièmes éjecteurs 8, par exemple au nombre de quatre pour chaque paire de satellites, sont par exemple disposés deux à deux à proximité des extrémités longitudinales des satellites 2. Dans chaque paire de deuxièmes éjecteurs, les deuxièmes éjecteurs 8 sont par exemple disposés côte-à-côte dans la profondeur des satellites 2. Un dispositif de maintien et libération 7 est par exemple disposé au centre de la longueur des satellites entre les deux satellites.

## Revendications

1. Procédé d'éjection d'au moins deux satellites (2 ; 2a, 2b) depuis un lanceur (3), lesdits au moins deux satellites (2 ; 2a, 2b) étant orientés selon un axe central confondu avec un axe longitudinal (A) du lanceur et solidarisés entre eux côte-à-côte, le procédé comprenant :
a. une orientation initiale de la direction de l'axe longitudinal (A) du lanceur, de manière à former un angle (θ) prédéterminé avec un axe de vitesse orbitale (X), l'angle (θ) prédéterminé étant compris entre 20° et 60°,
b. une première séparation comprenant la séparation simultanée hors du lanceur (3) desdits satellites (2 ; 2a, 2b) selon l'axe longitudinal (A) avec une première vitesse différentielle prédéterminée (dV1) relativement au lanceur (3), lesdits au moins deux satellites (2 ; 2a, 2b) restant solidaires entre eux, puis
c. une deuxième séparation comprenant la séparation desdits satellites (2 ; 2a, 2b) l'un par rapport à l'autre selon un axe perpendiculaire à l'axe central et compris dans le plan orbital, avec une deuxième vitesse différentielle prédéterminée (dV2).

2. Procédé selon la revendication 1, dans lequel la projection de la première vitesse différentielle (dV1) entre le lanceur (3) et lesdits satellites (2 ; 2a, 2b) sur l'axe de vitesse orbitale (X) est comprise entre 0,02 m.s⁻¹ et 0,6 m.s⁻¹ et dans lequel la projection de la deuxième vitesse différentielle (dV2) entre lesdits satellites sur l'axe de vitesse orbitale (X) est comprise entre 0,02 m.s⁻¹ et 0,6 m.s⁻¹.

3. Procédé selon l'une quelconque des revendications précédentes, dans lequel chaque satellite (2 ; 2a, 2b) a un rapport de sa longueur (L1) sur sa largeur (12) au moins égal à deux, et dans lequel chaque satellite (2 ; 2a, 2b) est retenu initialement à une extrémité longitudinale (4) sur le lanceur (3).

4. Procédé selon l'une quelconque des revendications précédentes, dans lequel lesdits satellites (2 ; 2a, 2b) sont initialement reliés au lanceur (3) à l'aide d'au moins un premier dispositif de maintien et libération (HDRM) (5) qui est configuré pour libérer lesdits satellites (2 ; 2a, 2b) pour la mise en œuvre de la première séparation, ladite mise en œuvre étant enclenchée notamment par le lanceur (3), et dans lequel au moins un premier éjecteur (6), notamment quatre premiers éjecteurs (6), est disposé entre le lanceur (3) et chacun desdits satellites (2 ; 2a, 2b) et s'étend sensiblement selon l'axe longitudinal (A), ledit au moins un premier éjecteur (6) étant initialement préchargé de manière à stocker une première quantité d'énergie adaptée pour conférer ladite première vitesse différentielle (dV1) lors de la première séparation.

5. Procédé selon l'une quelconque des revendications précédentes, dans lequel lesdits satellites (2 ; 2a, 2b) sont reliés initialement entre eux à l'aide d'au moins un deuxième dispositif de maintien et libération (HDRM) (7), notamment au moins deux, qui est configuré pour libérer lesdits satellites (2 ; 2a, 2b) pour la mise en œuvre de la deuxième séparation, et dans lequel au moins un deuxième éjecteur (8), notamment quatre deuxièmes éjecteurs (8), est initialement disposé entre lesdits satellites (2 ; 2a, 2b) et s'étend perpendiculairement par rapport à l'axe central et dans le plan de l'orbite, ledit au moins un deuxième éjecteur (8) étant initialement préchargé de manière à stocker une deuxième quantité d'énergie adaptée pour conférer ladite deuxième vitesse différentielle (dV2) lors de ladite deuxième séparation.

6. Procédé selon l'une quelconque des revendications précédentes, dans lequel le laps de temps (dt) entre la mise en œuvre de la première séparation et la mise en œuvre de la deuxième séparation est inférieur à 10s, de préférence inférieur à 5s.

7. Système spatial (1) d'éjection d'au moins deux satellites (2 ; 2a, 2b), comportant un lanceur (3) recevant lesdits satellites (2 ; 2a, 2b) reliés initialement au lanceur (3), lesdits satellites (2 ; 2a, 2b) étant orientés selon un axe central confondu avec un axe longitudinal (A) du lanceur et solidarisés entre eux côte-à-côte, ledit système spatial (1) étant **caractérisé en ce qu'**il comprend :
a. un module de pilotage d'une orientation initiale de la direction de l'axe (A) longitudinal du lanceur, de manière à former un angle (θ) prédéterminé avec un axe de vitesse orbitale (X), l'angle (θ) prédéterminé étant compris entre 20° et 60°,
b. un premier module de commande d'une première séparation comprenant la séparation simultanée hors du lanceur (3) desdits satellites (2 ; 2a, 2b) selon l'axe longitudinal (A) avec une première vitesse différentielle prédéterminée (dV1) relativement au lanceur (3), lesdits satellites (2 ; 2a, 2b) restant solidaires entre eux, puis
c. un deuxième module de commande d'une deuxième séparation comprenant la séparation desdits satellites (2 ; 2a, 2b) l'un par rapport à l'autre selon un axe transversal à l'axe central avec une deuxième vitesse différentielle prédéterminée (dV2).

8. Système spatial (1) selon la revendication 7, dans lequel le premier module de commande est configuré pour commander la première séparation sur ordre distant provenant d'une station au sol et dans lequel un desdits satellites (2 ; 2a, 2b) est configuré pour détecter la mise en œuvre de la première séparation et pour déclencher, suite à ladite détection, la deuxième séparation commandée par le deuxième module de commande.

9. Système spatial (1) selon l'une quelconque des revendications 7 à 8, dans lequel chaque satellite (2 ; 2a, 2b) a un rapport de sa longueur (L1) sur sa largeur (12) au moins égal à deux, et dans lequel chaque satellite (2 ; 2a, 2b) est retenu initialement à une extrémité longitudinale (4) sur le lanceur (3).

10. Système spatial (1) selon l'une quelconque des revendications 7 à 9, dans lequel le lanceur (3) comporte au moins un premier dispositif de maintien et libération (HDRM) (5) pour maintenir initialement lesdits satellites (2 ; 2a, 2b) reliés au lanceur (3), ledit premier module de commande étant configuré pour actionner ledit premier dispositif de maintien et libération (5) de manière à séparer lesdits satellites hors du lanceur (3), et dans lequel le lanceur (3) comporte au moins un premier éjecteur (6), notamment quatre premiers éjecteurs (6), disposé entre le lanceur (3) et chacun desdits satellites (2 ; 2a, 2b) et s'étendant sensiblement selon l'axe longitudinal (A), ledit au moins un premier éjecteur (6) étant initialement préchargé de manière à stocker une première quantité d'énergie adaptée pour conférer ladite première vitesse différentielle (dV1) lors de la première séparation.

11. Système spatial (1) selon l'une quelconque des revendications 7 à 10, dans lequel lesdits satellites (2 ; 2a, 2b) comportent au moins un deuxième dispositif de maintien et libération (HDRM) (7) pour les relier initialement entre eux, ledit deuxième module de commande étant configuré pour actionner ledit deuxième dispositif de maintien et libération de manière à séparer lesdits satellites (2 ; 2a, 2b) entre eux, lesdits satellites (2 ; 2a, 2b) comportant au moins un deuxième éjecteur (8), notamment quatre deuxièmes éjecteurs (8), initialement disposé entre lesdits satellites (2 ; 2a, 2b) et s'étendant sensiblement transversalement par rapport à l'axe central, ledit au moins un deuxième éjecteur (8) étant initialement préchargé de manière à stocker une deuxième quantité d'énergie adaptée pour conférer ladite deuxième vitesse différentielle (dV2) lors de la deuxième séparation.

## Patentansprüche

1. Verfahren zum Auswerfen von mindestens zwei Satelliten (2; 2a, 2b) aus einer Trägerrakete (3), wobei die mindestens zwei Satelliten (2; 2a, 2b) entlang einer Mittelachse ausgerichtet sind, die mit einer Längsachse (A) der Trägerrakete zusammenfällt, und nebeneinander miteinander verbunden sind, wobei das Verfahren umfasst:
a. eine anfängliche Ausrichtung der Richtung der Längsachse (A) der Trägerrakete, um einen vorbestimmten Winkel (θ) mit einer Bahngeschwindigkeitsachse (X) zu bilden, wobei der vorbestimmte Winkel (θ) zwischen 20° und 60° liegt,
b. eine erste Trennung, die die gleichzeitige Trennung der Satelliten (2; 2a, 2b) von der Trägerrakete (3) entlang der Längsachse (A) mit einer ersten vorbestimmten Differenzgeschwindigkeit (dV1) relativ zur Trägerrakete (3) umfasst, wobei die mindestens zwei Satelliten (2; 2a, 2b) miteinander verbunden bleiben, dann
c. eine zweite Trennung, die die Trennung der Satelliten (2; 2a, 2b) voneinander entlang einer zur Mittelachse senkrechten und in der Orbitalebene liegenden Achse mit einer zweiten vorbestimmten Differenzgeschwindigkeit (dV2) umfasst.

2. Verfahren nach Anspruch 1, wobei die Projektion der ersten Differenzgeschwindigkeit (dV1) zwischen der Trägerrakete (3) und den Satelliten (2; 2a, 2b) auf die Bahngeschwindigkeitsachse (X) zwischen 0,02 m.s⁻¹ und 0,6 m.s⁻¹ liegt und wobei die Projektion der zweiten Differenzgeschwindigkeit (dV2) zwischen den Satelliten auf die Bahngeschwindigkeitsachse (X) zwischen 0,02 m.s⁻¹ und 0,6 m.s⁻¹ liegt.

3. Verfahren nach einem der vorhergehenden Ansprüche, wobei jeder Satellit (2; 2a, 2b) ein Verhältnis seiner Länge (L1) zu seiner Breite (l2) von mindestens zwei aufweist, und wobei jeder Satellit (2; 2a, 2b) anfänglich an einem Längsende (4) an der Trägerrakete (3) gehalten wird.

4. Verfahren nach einem der vorhergehenden Ansprüche, wobei die Satelliten (2; 2a, 2b) anfänglich mit der Trägerrakete (3) mittels mindestens einer ersten Halte- und Freigabevorrichtung (HDRM) (5) verbunden sind, die so konfiguriert ist, dass sie die Satelliten (2; 2a, 2b) zur Durchführung der ersten Trennung freigibt, wobei die Durchführung insbesondere durch die Trägerrakete (3) ausgelöst wird, und wobei mindestens ein erster Ejektor (6), insbesondere vier erste Ejektoren (6), zwischen der Trägerrakete (3) und jedem der Satelliten (2; 2a, 2b) angeordnet ist und sich im Wesentlichen entlang der Längsachse (A) erstreckt, wobei der mindestens eine erste Ejektor (6) anfänglich vorgespannt ist, um eine erste Energiemenge zu speichern, die geeignet ist, die erste Differenzgeschwindigkeit (dV1) während der ersten Trennung zu verleihen.

5. Verfahren nach einem der vorhergehenden Ansprüche, wobei die Satelliten (2; 2a, 2b) anfänglich miteinander mittels mindestens einer zweiten Halte- und Freigabevorrichtung (HDRM) (7), insbesondere mindestens zwei, verbunden sind, die so konfiguriert ist, dass sie die Satelliten (2; 2a, 2b) zur Durchführung der zweiten Trennung freigibt, und wobei mindestens ein zweiter Ejektor (8), insbesondere vier zweite Ejektoren (8), anfänglich zwischen den Satelliten (2; 2a, 2b) angeordnet ist und sich senkrecht zur Mittelachse und in der Orbitalebene erstreckt, wobei der mindestens eine zweite Ejektor (8) anfänglich vorgespannt ist, um eine zweite Energiemenge zu speichern, die geeignet ist, die zweite Differenzgeschwindigkeit (dV2) während der zweiten Trennung zu verleihen.

6. Verfahren nach einem der vorhergehenden Ansprüche, wobei die Zeitspanne (dt) zwischen der Durchführung der ersten Trennung und der Durchführung der zweiten Trennung weniger als 10 s, vorzugsweise weniger als 5 s beträgt.

7. Raumfahrtsystem (1) zum Auswerfen von mindestens zwei Satelliten (2; 2a, 2b), umfassend eine Trägerrakete (3), die die Satelliten (2; 2a, 2b) aufnimmt, die anfänglich mit der Trägerrakete (3) verbunden sind, wobei die Satelliten (2; 2a, 2b) entlang einer Mittelachse ausgerichtet sind, die mit einer Längsachse (A) der Trägerrakete zusammenfällt, und nebeneinander miteinander verbunden sind, wobei das Raumfahrtsystem (1) **dadurch gekennzeichnet ist, dass** es umfasst:
a. ein Steuermodul für eine anfängliche Ausrichtung der Richtung der Längsachse (A) der Trägerrakete, um einen vorbestimmten Winkel (θ) mit einer Bahngeschwindigkeitsachse (X) zu bilden, wobei der vorbestimmte Winkel (θ) zwischen 20° und 60° liegt,
b. ein erstes Befehlsmodul für eine erste Trennung, die die gleichzeitige Trennung der Satelliten (2; 2a, 2b) von der Trägerrakete (3) entlang der Längsachse (A) mit einer ersten vorbestimmten Differenzgeschwindigkeit (dV1) relativ zur Trägerrakete (3) umfasst, wobei die Satelliten (2; 2a, 2b) miteinander verbunden bleiben, dann
c. ein zweites Befehlsmodul für eine zweite Trennung, die die Trennung der Satelliten (2; 2a, 2b) voneinander entlang einer Querachse zur Mittelachse mit einer zweiten vorbestimmten Differenzgeschwindigkeit (dV2) umfasst.

8. Raumfahrtsystem (1) nach Anspruch 7, wobei das erste Befehlsmodul so konfiguriert ist, dass es die erste Trennung auf einen Fernbefehl hin befiehlt, der von einer Bodenstation stammt, und wobei einer der Satelliten (2; 2a, 2b) so konfiguriert ist, dass er die Durchführung der ersten Trennung erkennt und nach dieser Erkennung die zweite Trennung auslöst, die vom zweiten Befehlsmodul befohlen wird.

9. Raumfahrtsystem (1) nach einem der Ansprüche 7 bis 8, wobei jeder Satellit (2; 2a, 2b) ein Verhältnis seiner Länge (L1) zu seiner Breite (l2) von mindestens zwei aufweist, und wobei jeder Satellit (2; 2a, 2b) anfänglich an einem Längsende (4) an der Trägerrakete (3) gehalten wird.

10. Raumfahrtsystem (1) nach einem der Ansprüche 7 bis 9, wobei die Trägerrakete (3) mindestens eine erste Halte- und Freigabevorrichtung (HDRM) (5) umfasst, um die Satelliten (2; 2a, 2b) anfänglich mit der Trägerrakete (3) verbunden zu halten, wobei das erste Befehlsmodul so konfiguriert ist, dass es die erste Halte- und Freigabevorrichtung (5) betätigt, um die Satelliten von der Trägerrakete (3) zu trennen, und wobei die Trägerrakete (3) mindestens einen ersten Ejektor (6), insbesondere vier erste Ejektoren (6), umfasst, der zwischen der Trägerrakete (3) und jedem der Satelliten (2; 2a, 2b) angeordnet ist und sich im Wesentlichen entlang der Längsachse (A) erstreckt, wobei der mindestens eine erste Ejektor (6) anfänglich vorgespannt ist, um eine erste Energiemenge zu speichern, die geeignet ist, die erste Differenzgeschwindigkeit (dV1) während der ersten Trennung zu verleihen.

11. Raumfahrtsystem (1) nach einem der Ansprüche 7 bis 10, wobei die Satelliten (2; 2a, 2b) mindestens eine zweite Halte- und Freigabevorrichtung (HDRM) (7) umfassen, um sie anfänglich miteinander zu verbinden, wobei das zweite Befehlsmodul so konfiguriert ist, dass es die zweite Halte- und Freigabevorrichtung betätigt, um die Satelliten (2; 2a, 2b) voneinander zu trennen, wobei die Satelliten (2; 2a, 2b) mindestens einen zweiten Ejektor (8), insbesondere vier zweite Ejektoren (8), umfassen, der anfänglich zwischen den Satelliten (2; 2a, 2b) angeordnet ist und sich im Wesentlichen quer zur Mittelachse erstreckt, wobei der mindestens eine zweite Ejektor (8) anfänglich vorgespannt ist, um eine zweite Energiemenge zu speichern, die geeignet ist, die zweite Differenzgeschwindigkeit (dV2) während der zweiten Trennung zu verleihen.

## Claims

1. A method for ejecting at least two satellites (2; 2a, 2b) from a launcher (3), said at least two satellites (2; 2a, 2b) being oriented along a central axis coinciding with a longitudinal axis (A) of the launcher and being secured to one another side-by-side, the method comprising:
a. an initial orientation of the direction of the longitudinal axis (A) of the launcher, so as to form a predetermined angle (θ) with an orbital velocity axis (X), the predetermined angle (θ) being comprised between 20° and 60°,
b. a first separation comprising the simultaneous separation from the launcher (3) of said satellites (2; 2a, 2b) along the longitudinal axis (A) with a first predetermined differential velocity (dV1) relative to the launcher (3), said at least two satellites (2; 2a, 2b) remaining secured to one another, then
c. a second separation comprising the separation of said satellites (2; 2a, 2b) from one another along an axis perpendicular to the central axis and comprised in the orbital plane, with a second predetermined differential velocity (dV2).

2. The method according to claim 1, wherein the projection of the first differential velocity (dV1) between the launcher (3) and said satellites (2; 2a, 2b) on the orbital velocity axis (X) is comprised between 0.02 m.s⁻¹ and 0.6 m.s⁻¹ and wherein the projection of the second differential velocity (dV2) between said satellites on the orbital velocity axis (X) is comprised between 0.02 m.s⁻¹ and 0.6 m.s⁻¹.

3. The method according to any one of the preceding claims, wherein each satellite (2; 2a, 2b) has a ratio of its length (L1) to its width (l2) of at least two, and wherein each satellite (2; 2a, 2b) is initially retained at a longitudinal end (4) on the launcher (3).

4. The method according to any one of the preceding claims, wherein said satellites (2; 2a, 2b) are initially connected to the launcher (3) by means of at least a first hold-down and release mechanism (HDRM) (5) which is configured to release said satellites (2; 2a, 2b) for the implementation of the first separation, said implementation being triggered in particular by the launcher (3), and wherein at least one first ejector (6), in particular four first ejectors (6), is disposed between the launcher (3) and each of said satellites (2; 2a, 2b) and extends substantially along the longitudinal axis (A), said at least one first ejector (6) being initially preloaded so as to store a first quantity of energy suitable for imparting said first differential velocity (dV1) during the first separation.

5. The method according to any one of the preceding claims, wherein said satellites (2; 2a, 2b) are initially connected to one another by means of at least a second hold-down and release mechanism (HDRM) (7), in particular at least two, which is configured to release said satellites (2; 2a, 2b) for the implementation of the second separation, and wherein at least one second ejector (8), in particular four second ejectors (8), is initially disposed between said satellites (2; 2a, 2b) and extends perpendicularly with respect to the central axis and in the orbital plane, said at least one second ejector (8) being initially preloaded so as to store a second quantity of energy suitable for imparting said second differential velocity (dV2) during said second separation.

6. The method according to any one of the preceding claims, wherein the time lapse (dt) between the implementation of the first separation and the implementation of the second separation is less than 10s, preferably less than 5s.

7. A space system (1) for ejecting at least two satellites (2; 2a, 2b), comprising a launcher (3) receiving said satellites (2; 2a, 2b) initially connected to the launcher (3), said satellites (2; 2a, 2b) being oriented along a central axis coinciding with a longitudinal axis (A) of the launcher and being secured to one another side-by-side, said space system (1) being **characterized in that** it comprises:
a. a piloting module for an initial orientation of the direction of the longitudinal axis (A) of the launcher, so as to form a predetermined angle (θ) with an orbital velocity axis (X), the predetermined angle (θ) being comprised between 20° and 60°,
b. a first control module for a first separation comprising the simultaneous separation from the launcher (3) of said satellites (2; 2a, 2b) along the longitudinal axis (A) with a first predetermined differential velocity (dV1) relative to the launcher (3), said satellites (2; 2a, 2b) remaining secured to one another, then
c. a second control module for a second separation comprising the separation of said satellites (2; 2a, 2b) from one another along a transverse axis to the central axis with a second predetermined differential velocity (dV2).

8. The space system (1) according to claim 7, wherein the first control module is configured to command the first separation upon a remote command originating from a ground station and wherein one of said satellites (2; 2a, 2b) is configured to detect the implementation of the first separation and to trigger, following said detection, the second separation commanded by the second control module.

9. The space system (1) according to any one of claims 7 to 8, wherein each satellite (2; 2a, 2b) has a ratio of its length (L1) to its width (l2) of at least two, and wherein each satellite (2; 2a, 2b) is initially retained at a longitudinal end (4) on the launcher (3).

10. The space system (1) according to any one of claims 7 to 9, wherein the launcher (3) comprises at least a first hold-down and release mechanism (HDRM) (5) for initially maintaining said satellites (2; 2a, 2b) connected to the launcher (3), said first control module being configured to actuate said first hold-down and release mechanism (5) so as to separate said satellites from the launcher (3), and wherein the launcher (3) comprises at least one first ejector (6), in particular four first ejectors (6), disposed between the launcher (3) and each of said satellites (2; 2a, 2b) and extending substantially along the longitudinal axis (A), said at least one first ejector (6) being initially preloaded so as to store a first quantity of energy suitable for imparting said first differential velocity (dV1) during the first separation.

11. The space system (1) according to any one of claims 7 to 10, wherein said satellites (2; 2a, 2b) comprise at least a second hold-down and release mechanism (HDRM) (7) for initially connecting them to one another, said second control module being configured to actuate said second hold-down and release mechanism so as to separate said satellites (2; 2a, 2b) from one another, said satellites (2; 2a, 2b) comprising at least one second ejector (8), in particular four second ejectors (8), initially disposed between said satellites (2; 2a, 2b) and extending substantially transversely with respect to the central axis, said at least one second ejector (8) being initially preloaded so as to store a second quantity of energy suitable for imparting said second differential velocity (dV2) during the second separation.
